# EUROPÄISCHE PATENTSCHRIFT

(11) **EP 1 080 973 B1**
(45) Veröffentlichungstag und Bekanntmachung des Hinweises auf die Patenterteilung: **09.02.2005**
(21) Anmeldenummer: 00115688.4
(22) Anmeldetag: 21.07.2000
(51) Int. Cl.: B60K 35/00, B60K 37/02

(54) **Anzeigeinstrument**
Display device
Appareil indicateur

(30) Priorität: 03.09.1999 DE 19942193
(43) Veröffentlichungstag der Anmeldung: 07.03.2001
(73) Patentinhaber: Siemens Aktiengesellschaft, 80333 München (DE)
(72) Erfinder: Hähl, Manfred, 63165 Mühlheim (DE)

(56) Entgegenhaltungen:
- EP-A- 0 896 897
- DE-A- 2 942 730
- DE-C- 19 737 726
- FR-A- 2 743 534

## Beschreibung

Die Erfindung betrifft ein für ein Kraftfahrzeug bestimmtes Anzeigeinstrument mit einem rückseitig von einem Beleuchtungsmittel beleuchtbaren Zifferblatt, welches sowohl im wesentlichen lichtundurchlässige als auch transparente, eine Skalierung oder Zeichen bildende Bereiche aufweist, und mit einer Lamellenfolie zur Beschränkung des Lichtaustrittwinkels auf einen bestimmten Bereich.

Ein solches aus DE-A- 2 942 730 bekanntes Anzeigeinstrument wird zur Darstellung von Informationen, die für den Betrieb und die Steuerung des Kraftfahrzeuges relevant sind, eingesetzt. Hierzu ist das Anzeigeinstrument im ständigen Blickfeld des Kraftfahrzeugführers an einer Armaturentafel angebracht. Um auch bei ungünstiger Umgebungsbeleuchtung eine zuverlässige Ablesbarkeit sicherzustellen, ist das Anzeigeinstrument rückseitig beleuchtbar. Hierdurch erscheinen beispielsweise Ziffern oder Symbole als hell leuchtende Bereiche vor einem im übrigen dunklen Hintergrund. In gleicher Weise werden Warnsignale durch eine auffällige Farbgebung hervorgehoben und sind dem Benutzer so unmittelbar augenfällig.

Das derart von dem Anzeigeinstrument in den Fahrgastraum emittierte Licht kann dadurch jedoch unter ungünstigen Umständen insbesondere an einer Front- oder Seitenscheibe des Kraftfahrzeuges zu Reflexionen führen. Hierdurch wird der Fahrer von dem Verkehrsgeschehen abgelenkt und sein Wahrnehmungsvermögen derart nachteilig beeinflusst, dass ein erhöhtes Unfallrisiko nicht auszuschließen ist.

Um diesem Problem entgegenzuwirken, hat man in der Vergangenheit das Anzeigeinstrument in einen Schacht eingesetzt, wobei aufgrund seiner gegenüber der Armaturentafel zurückgesetzten Anordnung eine Abstrahlung des Lichtes in Richtung der Front- oder Seitenscheibe vermieden wird. Hieraus hat sich jedoch häufig ein unerwünschter Betrachtungswinkel ergeben, wobei zudem die gestalterischen Möglichkeiten der Armaturentafel durch die vertiefte Anordnung stark eingeschränkt waren. Weiterhin ist eine Anpassung des Anzeigeinstrumentes an unterschiedliche Sitzpositionen des Insassen nicht möglich, so dass auch hierdurch die Ablesbarkeit eingeschränkt sein kann. Darüber hinaus erfordert der Schacht auch einen erheblichen Einbauraum, der in Kraftfahrzeugen aufgrund beengter Platzverhältnisse oft nur schwer zur Verfügung zu stellen ist.

Um diesem Problem entgegenzutreten, ist ein Lösungsvorschlag bekannt geworden, bei dem vor dem Zifferblatt eine Lamellenfolie ähnlich einer Jalousie angeordnet ist, so dass das Licht ausschließlich im Bereich eines bestimmten Lichtaustrittwinkels emittiert wird. Dieser Lichtaustrittwinkel ist dabei derart bemessen, dass ein Auftreffen des Lichts auf eine reflektierende Oberfläche des Fahrgastraumes, insbesondere die Frontoder Seitenscheiben, ausgeschlossen wird und daher störende Reflexionen vermieden werden können. Als nachteilig hat sich dabei erwiesen, dass die Lamellenfolie einerseits aus designtechnischen Überlegungen, andererseits aufgrund ihrer Eigenreflexionen ihrerseits mit einer Abdeckung versehen sein muss, die diffus transparente Eigenschaften und gegebenenfalls auch eine Färbung aufweist, die bei dem nicht beleuchteten Anzeigeinstrument den Blick auf rückwärtige Bauelemente des Anzeigeinstrumentes, insbesondere auf die Lamellenfolie, versperrt. Diese Eigenschaften der Abdeckung führen jedoch zugleich zu einer Streuwirkung des emittierten Lichtes, so dass hierdurch aufgrund des großen Abstrahlwinkels dennoch störende Reflexionen verursacht werden. Daher brachte dieser Lösungsvorschlag lediglich einen mäßigen Erfolg.

Der Erfindung liegt das Problem zugrunde, ein Anzeigeinstrument der eingangs genannten Art so zu gestalten, dass störende Reflexionen zuverlässig vermieden werden. Zugleich soll ein einfacher Aufbau des Anzeigeinstrumentes realisiert werden.

Dieses Problem wird erfindungsgemäß dadurch gelöst, dass das Zifferblatt an einer einem möglichen Betrachter zugewandten Vorderseite des Anzeigeinstrumentes und die Lamellenfolie zwischen dem Zifferblatt und dem Beleuchtungsmittel angeordnet ist.

Hierdurch kann auf eine Abdeckung der Lamellenfolie verzichtet werden, so dass zugleich eine Streuwirkung des emittierten Lichtes an der Vorderseite des Anzeigeinstrumentes ausgeschlossen ist. Dabei kann auf zusätzliche Maßnahmen, die den unmittelbaren Blick des Insassen auf die Lamellenfolie verhindern, verzichtet werden, da das Zifferblatt überwiegend lichtundurchlässige Bereiche aufweist, die einen möglichen Einblick in das Anzeigeinstrument ausschließen, während die transparenten Bereiche der Ziffern, Skalierung oder sonstiger Zeichen eine vergleichsweise kleine Fläche aufweisen, so dass schon allein aus diesem Grunde die Lamellenfolie für den Betrachter unsichtbar ist. Zudem ist die Fläche der transparenten Bereiche für das eintretende Licht unzureichend, um den Innenraum des Anzeigeinstrumentes zu erhellen, so dass das Zifferblatt bei abgeschalteter Beleuchtung als eine im wesentlichen einheitlich dunkle Fläche erscheint. Auch im beleuchteten Betrieb des Anzeigeinstrumentes ist die Lamellenfolie aufgrund der hohen Lichtstärke und des scharfen Kontrastes nicht zu erkennen.

Die Lichtemission des Anzeigeinstrumentes ist in den im Verhältnis zu den lichtdurchlässigen Bereichen größeren lichtundurchlässigen Bereichen ausgeschlossen, so dass störende Reflexionen in den Front- oder Seitenscheiben vermieden werden können. Eine besonders vorteilhafte Weiterbildung der Erfindung ist jedoch auch dadurch gegeben, dass die lichtundurchlässigen Bereiche des Zifferblattes eine weitgehend reflexionsfreie Beschaffenheit aufweisen. Hierdurch können auch solche Reflexionen verhindert werden, die durch auf das Zifferblatt von außen auftreffendes Fremdlicht oder Streulicht, beispielsweise das Sonnenlicht, verursacht werden können.

Hierzu ist es besonders günstig, wenn die lichtundurchlässigen Bereiche des Zifferblattes an ihrer dem Betrachter zugewandten Außenseite mit einer Strukturierung versehen sind. Eine solche beispielsweise als Mattierung ausgeführte Strukturierung ermöglicht sowohl eine weitgehend reflexionsfreie Oberflächengestaltung des Zifferblattes als auch die Gestaltung eines ansprechenden optischen Erscheinungsbildes. Die Strukturierung kann dabei zugleich als Träger weiterer Informationssysteme, beispielsweise Beschriftungen, ausgeführt sein oder eine beliebige Farbgebung aufweisen. Denkbar ist auch das Anbringen einer individuellen Stoff- oder Lederverkleidung entsprechend des Kundenwunsches.

Wenn die transparenten Bereiche eine stark diffuse Lichtdurchlässigkeit aufweisen, dann wird die Richtwirkung der Lamellenfolie wieder aufgehoben und es kann zu unerwünschten Reflexionen kommen. Eine günstige Weiterbildung der Erfindung ist daher dann erreicht, wenn die transparenten Bereiche keine oder lediglich eine sehr geringe Lichtstreuung aufweisen. Die geringe Lichtstreuung in der Größenordnung einiger Prozentpunkte kann dabei im Rahmen der Fertigungstoleranzen zugelassen werden.

Eine andere besonders vorteilhafte Ausführungsform der Erfindung ist dann gegeben, wenn das Zifferblatt mit der Lamellenfolie flächig verbunden ist. Hierdurch fällt das aus der Lamellenfolie austretende Licht unmittelbar in die transparenten Bereiche des Zifferblattes ein, so dass mögliche Streuwirkungen zwischen dem Zifferblatt und der Lamellenfolie, beispielsweise an der Rückseite der lichtundurchlässigen Bereiche des Zifferblattes, vermieden werden können. Die Verbindung wird dabei vorzugsweise mittels einer Klebung erreicht.

Eine andere, besonders günstige Weiterbildung der Erfindung ist dadurch gegeben, dass das Zifferblatt als eine auf eine Oberfläche der Lamellenfolie aufgebrachte Beschichtung ausgeführt ist. Die so geschaffene Baueinheit aus dem Zifferblatt und der Lamellenfolie ermöglicht eine sehr geringe Bautiefe und verringert zugleich den Herstellungsaufwand. Die Beschichtung wird hierzu beispielsweise auf die Lamellenfolie aufgedruckt und ermöglicht so eine problemlose graphische Ausgestaltung des Zifferblattes mit einer entsprechend verbesserten Ablesbarkeit und einem ansprechenden optischen Erscheinungsbild.

Das Anzeigeinstrument kann durch eine entsprechende Ansteuerung der lichtdurchlässigen Bereiche, die hierzu beispielsweise auch Leuchtbänder oder segmentierte Flächen bilden, den jeweils gewünschten Betriebszustand anzeigen. Eine andere besonders gut zur Darstellung unterschiedlicher Betriebszustände geeignete Ausgestaltung der Erfindung wird hingegen dann erreicht, wenn das Anzeigeinstrument ein Zeigerinstrument mit einer in Betrachtungsrichtung hinter der Lamellenfolie schwenkbar angeordneten Zeigerfahne aufweist. Hierdurch wird bei dem erfindungsgemäßen Anzeigeinstrument eine konventionelle Darstellungsform realisiert, die auch bei einem schnellen Blick auf das Anzeigeinstrument eine zuverlässige Ablesbarkeit ermöglicht. Die Zeigerfahne ist dabei durch die transparenten, insbesondere als Skalierung ausgeführten Bereiche hindurch sichtbar, wobei zugleich die Bezifferung integriert werden kann.

Hierbei ist es besonders günstig, wenn die Zeigerfahne beleuchtbar ist. Die Zeigerfahne kann daher auch in einer Kontrastfarbe beleuchtbar sein, so dass die Ablesbarkeit weiter gesteigert werden kann. Dabei kann die Zeigerfahne auch bedarfsgerecht ansteuerbar sein und so ausschließlich bei eingeschalteter Beleuchtung der Zeigerfahne für den Betrachter sichtbar sein. Die Beleuchtung des Zeigers ist vorteilhaft besonders hell, wenn der Zeiger aktiv beleuchtbar ist, d. h. zu seiner Beleuchtung eine Lichtquelle, insbesondere eine LED, aufweist.

Die Beleuchtung des Anzeigeinstrumentes kann durch Einkopplung von Fremdlicht, beispielsweise auch Umgebungslicht, realisiert werden. Besonders zweckmäßig ist es hingegen, wenn das Anzeigeinstrument zur Beleuchtung eine elektrische Lichtquelle aufweist. Diese kann beispielsweise auch entsprechend der Umgebungshelligkeit ansteuerbar sein, so dass für den Betrachter eine Blendwirkung durch eine zu hohe Lichtstärke vermieden wird. Durch Verwendung weiterer Lichtquellen wird darüber hinaus auch die Färbung des Lichtes und damit die wahlweise Ausleuchtung der lichtdurchlässigen Bereiche des Zifferblattes möglich. Als Lichtquellen sind bspw. Glühlampen, LEDs oder Leuchtstoffröhren geeignet.

Besonders nützlich ist hierzu eine Weiterbildung der Erfindung, bei der das Anzeigeinstrument zur gleichmäßigen Beleuchtung eine zwischen der Lichtquelle und der Lamellenfolie angeordnete Streuscheibe aufweist. Lokale Helligkeitsdifferenzen werden dadurch ausgeglichen, so dass eine einheitliche Beleuchtungsstärke der lichtdurchlässigen Bereiche des Zifferblattes und so eine verbesserte Ablesbarkeit und ein hochwertiges optisches Erscheinungsbild erreicht wird.

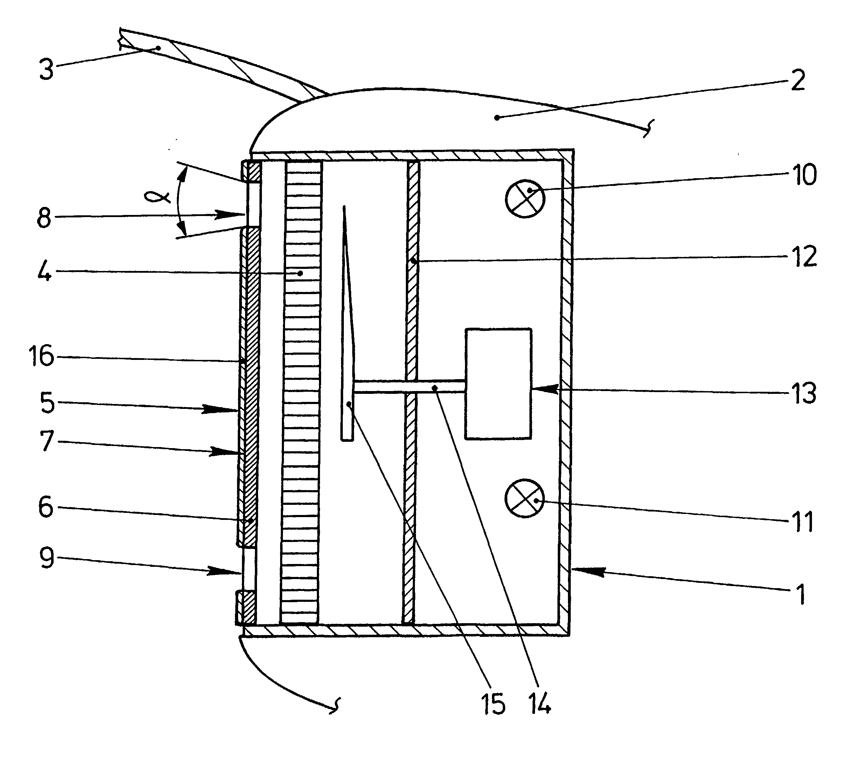

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt in einer seitlichen, teilweise geschnittenen Prinzipdarstellung ein Anzeigeinstrument 1 eines Kraftfahrzeuges. Das Anzeigeinstrument 1 ist an einer lediglich abschnittsweise dargestellten Armaturentafel 2 angebracht, welche ohne eine konventionelle Überdeckung unterhalb einer Frontscheibe 3 angeordnet ist. Um dennoch mögliche Reflexionen in der Frontscheibe 3 oder in hier nicht dargestellten Seitenscheiben durch Lichtemissionen des Anzeigeinstrumentes 1 zu verhindern, ist dieses mit einer Lamellenfolie 4 ausgestattet, welche einen Lichtaustrittwinkel α auf einen zulässigen, das Auftreffen der Lichtstrahlen auf die Frontscheibe 3 und/oder der die Seitenscheiben ausschließenden Bereich beschränkt.

Dabei fällt das derart ausgerichtete und aus der Lamellenfolie 4 austretende Licht in ein an einer Vorderseite 5 des Anzeigeinstrumentes 1 angeordnetes Zifferblatt 6.

Das Zifferblatt 6 weist neben lichtundurchlässigen Bereichen 7 auch transparente Bereiche 8, 9 auf, die so beispielsweise Bezifferungen, Skalierung oder Zeichen bilden und daher bei Beleuchtung des Anzeigeinstrumentes 1 als helle Bereiche 8, 9 vor einem dunklen Hintergrund erscheinen. Hierzu hat das Anzeigeinstrument 1 zwei Lichtquellen 10, 11, deren abgestrahltes Licht zunächst zur Vermeidung lokaler Helligkeitsdifferenzen in eine als Diffusor ausgeführte Streuscheibe 12 eingeleitet wird. Zur Darstellung unterschiedlicher Betriebszustände dient ein Zeigerinstrument 13, bspw. ein Tachometer, mit einer um eine Achse 14 schwenkbaren Zeigerfahne 15, die mittels einer weiteren, nicht dargestellten Lichtquelle aktiv beleuchtbar ist und deren Spitze so von einem Betrachter durch den jeweiligen transparenten Bereich 8, 9 hindurch sichtbar ist. Die lichtundurchlässigen Bereiche 7 des Zifferblattes 6 sind mit einer Strukturierung 16 versehen, so dass eine Reflexion von von außen auf das Anzeigeinstrument 1 auffallendem Umgebungslicht, die so zu einer eingeschränkten Ablesbarkeit führen könnte, ausgeschlossen werden kann.

Durch den Wegfall einer zusätzlichen Abdeckung an der Vorderseite 5 des Anzeigeinstrumentes 1 wird eine äußerst flache Bauform realisiert, wobei zugleich Eigenreflexionen vermieden werden können. Die lichtundurchlässigen Bereiche 7 können zudem beliebig entsprechend den individuellen Wünsche des Kunden ausgestaltet werden und beispielsweise auch mit einer austauschbaren Oberfläche versehen sein.

Denkbar sind auch Ausführungsformen, bei denen die Winkelstellung einzelner Lamellen der Lamellenfolie 4 insbesondere auch unabhängig voneinander verstellbar sind, um so eine Anpassung an unterschiedliche Betriebsbedingungen oder Sitzpositionen des Betrachters zu ermöglichen.

## Patentansprüche

1. Für ein Kraftfahrzeug bestimmtes Anzeigeinstrument (1) mit einem rückseitig von einem Beleuchtungsmittel (10, 11) beleuchtbaren Zifferblatt (6), welches sowohl im wesentlichen lichtundurchlässige als auch transparente, eine Skalierung oder Zeichen bildende Bereiche aufweist, und mit einer Lamellenfolie (4) zur Beschränkung des Lichtaustrittwinkels auf einen bestimmten Bereich, **dadurch gekennzeichnet, dass** das Zifferblatt (6) an einer einem möglichen Betrachter zugewandten Vorderseite (5) des Anzeigeinstrumentes (1) und die Lamellenfolie (4) zwischen dem Zifferblatt (6) und dem Beleuchtungsmittel angeordnet ist.

2. Anzeigeinstrument nach Anspruch 1, **dadurch gekennzeichnet, dass** die lichtundurchlässigen Bereiche (7) des Zifferblattes (6) eine weitgehend reflexionsfreie Beschaffenheit aufweisen.

3. Anzeigeinstrument nach Anspruch 1 oder 2, **dadurch gekennzeichnet, dass** die lichtundurchlässigen Bereiche (7) des Zifferblattes (6) an ihrer dem Betrachter zugewandten Außenseite mit einer Strukturierung (16) versehen sind.

4. Anzeigeinstrument nach einem der vorhergehenden Ansprüche, **dadurch gekennzeichnet, dass** die transparenten Bereiche (8, 9) keine oder lediglich eine sehr geringe Lichtstreuung aufweisen.

5. Anzeigeinstrument nach einem der vorhergehenden Ansprüche, **dadurch gekennzeichnet, dass** das Zifferblatt (6) mit der Lamellenfolie (4) flächig verbunden ist.

6. Anzeigeinstrument nach einem der vorhergehenden Ansprüche, **dadurch gekennzeichnet, dass** das Zifferblatt (6) als eine auf eine Oberfläche der Lamellenfolie (4) aufgebrachte Beschichtung ausgeführt ist.

7. Anzeigeinstrument nach einem der vorhergehenden Ansprüche, **dadurch gekennzeichnet, dass** das Anzeigeinstrument (1) ein Zeigerinstrument (13) mit einer in Betrachtungsrichtung hinter der Lamellenfolie (4) schwenkbar angeordneten Zeigerfahne (15) aufweist.

8. Anzeigeinstrument nach Anspruch 7, **dadurch gekennzeichnet, dass** die Zeigerfahne (15) beleuchtbar ist.

9. Anzeigeinstrument nach einem der vorhergehenden Ansprüche, **dadurch gekennzeichnet, dass** das Anzeigeinstrument (1) zur Beleuchtung eine elektrische Lichtquelle (10, 11) aufweist.

10. Anzeigeinstrument nach Anspruch 9, **dadurch gekennzeichnet, dass** das Anzeigeinstrument (1) zur gleichmäßigen Beleuchtung eine zwischen der Lichtquelle (10, 11) und der Lamellenfolie (4) angeordnete Streuscheibe (12) aufweist.

## Claims

1. Display instrument (1) intended for a motor vehicle and comprising a dial (6), which can be lit from the rear by a lighting means (10, 11) and has both essentially opaque and transparent areas forming a scale or symbols, and comprising a slat sheet (4) for restricting the light exit angle to a specific range, **characterized in that** the dial (6) is arranged on a front side (5), facing a possible viewer, of the display instrument (1), and the slat sheet (4) is arranged between the dial (6) and the lighting means.

2. Display instrument according to Claim 1, **characterized in that** the opaque areas (7) of the dial (6) have a largely non-reflecting nature.

3. Display instrument according to Claim 1 or 2, **characterized in that** the opaque areas (7) of the dial (6) are provided with a structure (16) on their outside facing the viewer.

4. Display instrument according to one of the preceding claims, **characterized in that** the transparent areas (8, 9) exhibit no light scattering or only very little.

5. Display instrument according to one of the preceding claims, **characterized in that** the dial (6) is connected to the slat sheet (4) in a planar fashion.

6. Display instrument according to one of the preceding claims, **characterized in that** the dial (6) is embodied as a coating applied to a surface of the slat sheet (4).

7. Display instrument according to one of the preceding claims, **characterized in that** the display instrument (1) has a pointer instrument (13) with a pointer flag (15) arranged pivotably behind the slat sheet (4) in the viewing direction.

8. Display instrument according to Claim 7, **characterized in that** the pointer flag (15) can be lit.

9. Display instrument according to one of the preceding claims, **characterized in that** the display instrument (1) has an electric light source (10, 11) for lighting.

10. Display instrument according to Claim 9, **characterized in that** for the purpose of uniform lighting the display instrument (1) has a lens (12) arranged between the light source (10, 11) and the slat sheet (4).

## Revendications

1. Appareil indicateur (1) destiné à un véhicule automobile, comportant un cadran (6), qui peut être éclairé par l'arrière par un moyen d'éclairage (10, 11) et qui a des zones non seulement essentiellement opaques, mais aussi des zones transparentes formant un cadrage ou des signes, et une membrane à lamelles (4) permettant de limiter l'angle d'émergence de la lumière à une plage déterminée, **caractérisé par le fait que** le cadran (6) est disposé sur une face avant (5) de l'appareil indicateur (1) tournée vers un observateur éventuel et que la membrane à lamelles (4) est placée entre le cadran (6) et le moyen d'éclairage.

2. Appareil indicateur selon la revendication 1 **caractérisé par le fait que** les zones opaques (7) du cadran (6) ont une constitution largement dénuée de réflexions.

3. Appareil indicateur selon la revendication 1 ou 2 **caractérisé par le fait que** les zones opaques (7) du cadran (6) sont dotées, sur leur face extérieure tournée vers l'observateur, d'une structuration (16).

4. Appareil indicateur selon l'une des revendications précédentes **caractérisé par le fait que** les zones transparentes (8, 9) ne dispersent pas de lumière ou seulement très peu de lumière.

5. Appareil indicateur selon l'une des revendications précédentes **caractérisé par le fait que** le cadran (6) est lié sur toute sa surface à la membrane à lamelles (4).

6. Appareil indicateur selon l'une des revendications précédentes **caractérisé par le fait que** le cadran (6) est exécuté sous la forme d'un revêtement appliqué sur une surface de la membrane à lamelles (4).

7. Appareil indicateur selon l'une des revendications précédentes **caractérisé par le fait que** l'appareil indicateur (1) comporte un instrument à aiguille (13) avec une palette d'aiguille (15) disposée, de telle sorte qu'elle puisse pivoter, derrière la membrane à lamelles (4), dans le sens de l'observation.

8. Appareil indicateur selon la revendication 7 **caractérisé par le fait que** la palette de l'aiguille (15) peut être illuminée.

9. Appareil indicateur selon l'une des revendications précédentes **caractérisé par le fait que** l'appareil indicateur (1) comporte, pour l'éclairage, une source électrique de lumière (10, 11).

10. Appareil indicateur selon la revendication 9 **caractérisé par le fait que** l'appareil indicateur (1) comporte, pour un éclairage uniforme, un verre diffusant (12) disposé entre la source de lumière (10, 11) et la membrane à lamelles (4).
